(19) Europäisches Patentamt
European Patent Office
Office européen des brevets

(11) **EP 2 253 368 B1**

(12) **EUROPEAN PATENT SPECIFICATION**

(45) Date of publication and mention
of the grant of the patent:
**02.11.2011   Bulletin 2011/44**

(51) Int Cl.:
***B01D 69/08*** *(2006.01)*   ***B01D 71/40*** *(2006.01)*
***B01D 71/68*** *(2006.01)*   ***B01D 67/00*** *(2006.01)*
***D01F 1/08*** *(2006.01)*

(21) Application number: **09006810.7**

(22) Date of filing: **20.05.2009**

(54) **Membranes having improved performance**

Membranen mit verbesserter Leistung

Membranes dotées de performance améliorée

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**24.11.2010   Bulletin 2010/47**

(73) Proprietor: **Gambro Lundia AB
220 10 Lund (SE)**

(72) Inventors:
 • **Krause, Bernd
 72414 Rangendingen (DE)**

 • **Zweigart, Carina
 72355 Schömberg (DE)**

(74) Representative: **Hornung, Veronika Margot et al
c/o Gambro Dialysatoren GmbH
Holger-Crafoord-Strasse 26
72379 Hechingen (DE)**

(56) References cited:
**US-A- 5 340 480      US-A1- 2003 159 980**

## Description

### Technical Field

The present invention relates to permselective asymmetric membranes being suitable e.g. for hemodialysis, hemodiafiltration and hemofiltration of blood, and having improved performance, allowing for enhanced removal of middle molecular weight substances, e.g. inflammatory mediators having a molecular weight between 20 and 40 kDa. The membranes are modified with particular polycarboxybetaines. The invention also relates to processes for the preparation of said membranes, devices comprising said membranes, and the use of said membranes in hemodialysis, hemodiafiltration or hemofiltration of blood, as well as in hioprocessing, plasma fractionation and the preparation of protein solutions.

### Background of the Invention

wo 86/00028 A1 discloses asymmetric hollow fibers based on polymeric fibrogenic substances selected from the group consisting of vinylidene polyfluorides, polysulfones, polyacrylonitriles, cellulose and cellulosic esters, poly(vinyl chloride), poly(vinyl acetate), polyamides, polyimides, polycarbonates, poly(phenylenc oxides), polystyrenes, polyethers, polyesters, poly(arylene oxides), polysulfides, polyvinylic polymers, polyallylic polymers, polyazoles, polyimidazoles, polyphosphazines, polyhydrazides and copolymers or mixtures thereof.

EP 0 082 433 A2 discloses an asymmetrical macroporous membrane, comprising polyvinylpyrrolidone polysulfone, polyether sulfone, or an aromatic or araliphatic polyamide

EP 0 168 783 Aldiscloses asymmetric hollow fibers based on a hydrophobic first polymer, e.g. polyarylsufone, polycarbonate, polyamide, polyvinyl chloride, modified polyacrylic acid, polyether, polyurethane or copolymers thereof, and a hydrophilic second polymer, e.g. polyvinylpyrrolidone, polyethylene glycol, polyglycol monoester, copolymers of polyethylene glycol and polypropylene glycol, water-soluble cellulose derivatives or polysorbate.

EP 0 305 787 A1 discloses a permselective asymmetric membrane suitable for hemodialysis, hemodiafiltration and hemofiltration of blood, comprised of a hydrophobic first polymer, e.g. polyamide, a hydrophilic second polymer, e.g. polyvinylpyrrolidone, and suitable additives. The membrane has a three-layer structure, comprising a first layer in the form of a dense, rather thin skin, responsible for the sieving properties, a second layer in the form of a sponge structure, having a high diffusive permeability and serving as a support for said first layer, and a third layer in the form of a finger structure, giving the membrane a mechanical stability.

EP 0 568 045 A1 discloses a polysulfone-based hollow fiber membrane having an asymmetric structure with a skin layer on its inner surface, comprising predominantly a polysulfone-based polymer, at least 1% by weight of a polyglycol, e.g. a polyethylene glycol, and 1-8% by weight of a vinylpyrrolidone-based polymer, e,g. a polyvinylpyrrolidone, a vinylpyrrolidone/vinylacetate copolymer, a vinylpyrrolidone/vinylalcohol copolymer, a vinylpyrrolidonc/styrene copolymer, a vinylpyrrolidone/dimethylaminocthyl methacrylate copolymer, said skin layer comprising a polysulfone-based polymer and a vinylpyrrolidone-based polymer.

EP 0 750 936 A1 discloses a membrane based on polysulfone and polyvinylpyrrolidone (PVP). The PVP consists of 10-50 wt.%, based on the total PVP, of a low molecular weight component having a molecular weight less than 100,000 Da and 90-50 wt.%, based on the total PVP, of a high molecular weight component having a molecular weight of 100,000 Da or more.

WO 2004/056459 A1 discloses a permselective asymmetric membrane suitable for hemodialysis, comprising at least one hydrophobic polymer, e.g. polyethersulfone, and at least one hydrophilic polymer, e.g. polyvinylpyrrolidone. The outer surface of the hollow fiber membrane has pores in the range of 0.5-3 $\mu$m and the number of pores in the outer surface is in the range of 10,000 to 150,000 pores per mm$^2$.

While these membranes already show good performance in hemodialysis, there is a desire to further improve their performance to enhance removal of middle molecular weight substances, e.g. inflammatory mediators having a molecular weight between 20 and 40 kDa. Tt has now been found that membranes with improved performance can be obtained by modifying the surface of the membranes with particular polycarboxybetaines. Modification of various types of membranes with polycarboxybetaines has been reported:

EP 1 747 059 A1 discloses a composite membrane comprising (a) a support member that has a plurality of pores extending through the support member and (b) a cross-linked copolymer comprising (i) a cationic monomer and an anionic monomer and/or (ii) a zwitterionic monomer, which cross-linked copolymer fills the pores of the support member. As suitable zwitterionic monomers, 4-imidazoleacrylic acid, 4-aminocinnamic acid hydrochloride, 4-(dimethylamino)-cinnamic acid, 1-(3-sulfopropyl)-2-vinylpyridinium hydroxide inner salL, 3-sulfopropyldimethyl-3-methacrylamido-propylammonium inner salt, and 5-amino-1,3-cyclohexadiene-1-carboxylic acid hydrochloride arc mentioned. The composite membranes are used in pervaporation processes to dehydrate aqueous mixtures of organic solvents or to remove wator from immiscible or partially miscible mixtures by pervaporation.

JP 2003/320229 A discloses hollow fiber membranes made mainly of polysulfone comprising, in the inner surface, a copolymer of a vinyl polymerizable monomer having a zwitterion in the molecule and another vinyl polymerizable monomer. Phosphobetaines, sulfobetaines and carboxybetaincs are mentioned, sulfobetaines being preferred. In the list of polymers suitable for the membrane, polysulfone, PES, PAES, and polyarylate polyethersulfone are mentioned. A polybetaine having a molecular weight ≤ 5,000 Da is dissolved in the bore liquid at a concentration of 0.001 to 10 wt.-%, preferably 0.01 to 5 wt.-%. According to the reference, the membrane shows low protein absorption and good biocompatibility.

WO 2007/24393 A discloses super-low fouling surfaces coated with polysulfobetaines prepared from one or more monomers selected from the group consisting of sulfobetaine acrylates, sulfobetaine acrylamides, sulfobetaine vinyl compounds, sulfobotaine epoxides, and mixtures thereof and polycarboxybetaines prepared from one or more monomers selected from the group consisting of carboxybetaine acrylates, carboxybetaine acrylamides, carboxybetaine vinyl compounds, carboxybetaine epoxides, and mixtures thereof, respectively. The surfaces are said to be highly resistant to protein adsorption or cell adhesion.

While the references indicate a reduction of protein adhesion and cell adhesion on the membrane effected by polycarboxybetaines, no mention is made in the documents of an increased selectivity of the membrane for molecules in the molecular weight range of 20 - 40 kDa.

## Summary of the Invention

It is an object of the present invention to improve the performance of permselective asymmetric membranes suitable for, e.g., hemodialysis, hemodiafiltration and hemofiltration of blood, so that removal. 1. of middle molecular weight substances, e.g. inflammatory mediators having a molecular weight between 20 and 40 kDa, is enhanced.

According to one aspect of the invention, a permselective asymmetric membrane having improved performance is provided. The membrane is modified with a polycarboxybetaine compound based on a poly(vinylpyrrolidone-co-vinylimidazole). Generally, the membrane comprises at least one hydrophobic polymer. Usually, the membrane will also comprise at least one hydrophilic polymer.

According to a further aspect, the invention relates to a process for preparing the permselective asymmetric membrane of the invention. In one embodiment of the process, a hollow fiber membrane having the surface of iLs lumen modified with a polycarboxybetaine is obtained by adding a polycarboxybetaine based on a poly(vinylpyrrolidone-co-vinylimidazole) to the center fluid (also called bore liquid) used in the spinning process.

The invention also provides devices comprising the membranes of the invention. Another aspect of the invention is the use of the membranes of the invention in hemodialysis, hemodiafiltration or hemofiltration of blood, as well as in bioprocessing, plasma fractionation and the preparation of protein solutions.

## Detailed Description

The hollow fiber membranes used in the present invention can be those described in EP 0 568 045 A1, EP 0 168 783 A1, EP 0 082 433 A2, WO 2004/056469 A1, EP 0 750 936 A1, or WO 86/00028 A1, all incorporated herein by reference. These membranes are manufactured from polymeric synthetic materials; Lhey have an asymmetric structure with high diffusive permeability (clearance) and have water filtration capability in ultrafiltration applications in the range of low flux to high flux. Suitable examples are the membrane based on polysulfone and polyvinylpyrrolidone (PVP) disclosed in EP 0 750 936 A1 and the 4-layer membrane based on polyethersulfone, PVP and polyamide disclosed in WO 2004/056469 A1.

In one embodiment, the permselective asymmetric membrane of the invention is based on at least one hydrophobic polymer and at least one hydrophilic polymer. In another embodiment, the permselective asymmetric membrane of the invention is based on a copolymer comprising monomer units bearing hydrophobic side chains and monomer units bearing hydrophilic side chains.

Said at least one hydrophobic polymer is preferably chosen from the group consisting of polyamide (PA), polyaramide (PAA), polyarylethersulfone (PAES), polyethersulfone (PES), polysulfone (PSU), polyarylsulfone (PASU), polycarbonate (PC), polyether, polyurethane (PUR), polyetherimide and copolymers of said polymers. In one embodiment, it is a polyethersulfone or a mix of a polyarylethersulfone and a polyamide. Polyethersulfone and polysulfone are preferred hydrophobic polymers. In one embodiment, polyethersulfone is used for preparing the membrane of the invention.

An example of a suitable polyethersulfone is a polymer having the general formula -[O-Ph-SO$_2$-Ph-]$_n$-, a weight average molecular weight of about 60,000 to 65,000 Da, preferably 63,000 to 65,000 Da, and a Mw/Mn of about 1,5 to 1,8.

Said at least one hydrophilic polymer is preferably chosen from the group consisting of polyvinylpyrrolidone (PVP), polyethylene glycol (PEG), polyglycolmonoester, water soluble cellulosic derivates, polysorbate and polyethylene-polypropylene oxide copolymers. In a particular embodiment, polyvinylpyrrolidone is used for prepaying the membrane of the invention, wherein the polyvinylpyrrolidone consists of a low molecular weight component having a molecular weight of below 100 kDa and a high molecular weight component having a molecular weight of 1.00 kDa or more.

In one embodiment, said hydrophobic polymer is a polyethersulfone (PES), and said at least one hydrophilic polymer is a polyvinylpyrrolidone (PVP). Preferably, a polyvinylpyrrolidone which consists of a low molecular weight component having a molecular weight of below 100 kDa and a high molecular weight component having a molecular weight of 100 kDa or more, is used for preparing the membrane of the invention.

In one embodiment, the membrane of the present invention comprises 80-99 wt.-% of polyethersulfone and 1-20 wt.-% of polyvinylpyrrolidone (PVP) . The PVP consists of a high (≥ 100 kDa) and low (< 100 kDa) molecular component, wherein the PVP consists of 10-45 weight-%, based on the total weight of PVP in the membrane, of a high molecular weight component, and of 55-90 weight-%, based on the total weight of PVP in the membrane, of a low molecular weight component.

The membrane according to the resent invention, due to its specific preparation and membrane characteristics as described before, is especially characterized by a high convective permeability Lp and a high diffusive permeability for small molecules, such as, for example, for urea or chloride ($P_{C1}$). The Lp is in the range of from $50 \cdot 10^{-4}$ to $600 \cdot 10^{-4}$ cm/bar·s, preferably from 60 to $300 \cdot 10^{-4}$ cm/bar-s. The chloride permeability $P_{C1}$ is in the range of from $13 \cdot 10^4$ to $23 \cdot 10^4$ cm/s, e.g. from $19 \cdot 10^{-4}$ to $22 \cdot 10^{-4}$ cm/s, or from $13 \cdot 10^{-4}$ to $16 \cdot 10^{-4}$ cm/s. The diffusive permeability can be determined according to E. Klein, F. Holland, A. Lebeouf, A. Donnaud, J. K. Smith, "Transport and Mechanical Properties of Hemodialysis Hollow Fibers", Journal of Membrane Science 1 (1976) 371 - 396, especially pages 375-379.

The membrane is further characterized by a high selectivity, i.e. a high removal rate for middle molecules. In one embodiment, the difference of the sieving coefficient of the membrane of the invention for ovalbumin (MW = 44 kDa) in aqueous solution and the sieving coefficient of the membrane for albumin (MW = 66 kDa) in aqueous solution is at least 50%, for example at least 53%, or at least 56%, or even at least 59%. The sieving coefficients are determined using protein solutions in PBS buffer having a pH of 7.2 and maintained at a temperature of 37 $\pm$ 1°C.

The membrane can be prepared by a solvent phase inversion spinning process, comprising the steps of

a) dissolving at least one membrane-forming polymer in at least one solvent to form a polymer solution;

b) extruding said polymer solutions through an outer ring slit of a nozzle with two concentric openings;

c) extruding a center fluid through the inner opening of the nozzle; and thereafter

d) washing the membrane obtained and, optionally, drying said membrane and sterilizing said membrane by steam treatment;

wherein the center fluid comprises a polycarboxybetaine compound based on a poly(vifiylpyrrolidonc-co-vinylimidazole). In one embodiment, the proportion of polycarboxybetaine compound in the center fluid ranges from 0.02 to 2 wt.-%, for example 0.05 to 0.5 wt.-%, or 0.05 to 0.25 wet.-% of the total amount of The center fluid.

Tn one embodiment of the invention, the polycarboxybetaine compound is the product of the reaction of a poly-(vinylpyrrolidone-co-vinylimidazole) with a vinylcarboxylic acid or a derivative thereof. Examples of suitable vinylcarboxylic acid compounds include acrylic acid and its esters, methacrylic acid and its esters, crotonic acid and its esters, angelic acid and its esters, etc.

In another embodiment of the invention, the polycarboxybetaine compound is the product of the reaction of a poly-(vinylpyrrolidone-co-viuylimidazcrls) with a halocarboxylic acid or a derivative thereof. Examples of suitable halocarboxylic acid compounds include haloacetic acids and their esters, e.g. chloroacetic acid (esters), bromoacetic acid (esters); halopropionic acids and their esters, e.g. chloropropionic acid (esters), bromopropionic acid (esters); halobutanoic acids and their esters, e.g. 2-chlorobutanoic acid (esters), 3-chlorobutanoic acid (esters), 2-bromobutanoic acid (esters), 3-bromobutanoic acid (esters), etc.

In one particular embodiment of the invention, the polycarboxybetaine compound is the product of the reaction of a poiy(vinylpyrrolidone-co-vinylimidazole) with acrylic acid, the poly(vinylpyrrolidone-co-vinylimidazole) being a copolymer of 50 mol-% vinylpyrrolidone and 50 mol-% vinylimidazole. In another particular embodiment of the invention, the polycarboxybetaine compound is the product of the reaction of a poly(vinylpyrrolidone-co-vinyli.midazole) with chloroacetic acid, the poly(vinylpyrrolidozie-co-vinylimidazole) being a copolymer of 50 mol-% vinylpyrrolidone and 50 mol-% vinylimidazole. Such a polymer is commercially available from BASF SE under the trade name Luvitec® VPI 55, e.g. Luvitec® VPI 55 K72M or Luvitec® VPT 55 K18P.

The poly(viriylpyrroiidone-co-vinylimidazole) used in the process of the invention is a copolymer of vinylpyrrolidone and vinylimidazole. The proportion of the monomers can be varied over a wide range, e.g. from 10:90 to 90:10. Tn many cases, it will be advantageous to use a copolymer comprising at least 30 mol-% of moieties derived from vinylimidazole, or even 50 mol-%. In a particular embodiment of the invention, a copolymer of 50 mol-% vinylpyrrolidone and 50 mol-% vinylimidazole is used. Methods for preparing such copolymers are known in the art.

In the process of the invention, the poly(vinylpyrrolidone-co-vinylimidazole) is reacted with a modifier which is a vinylcarboxylic acid or a derivative thereof, or a halocarboxylic acid or a derivative thereof, in a polymer-analogous reaction. Such reactions and suitable reaction conditions for performing them are known in principle to the person skilled in the art, e.g. from J. M. S. Pure Appl. Chem. A32 (1995) 138b - 1396, and the conditions for a particular reaction can be determined by routine experiments. The proportion of modifier will be selected according to the degree of derivatization desired, i.e. the desired amount of betaine functionalities in the resulting polycarboxybetaine. In case the polymer-analogous reaction is conducted using ester compounds, the ester groups have to be hydrolyzed in order to generate the betaine groups.

In one embodiment of the process for preparing the membrane of the present invention, the spinning solution comprises between 12 and 16 wt.-% of polyethersulfone as hydrophobic polymer and 3 to 12 wt.-%, e.g. 5 to 8 wt.-%, of PVP, wherein said PVP consists of 3 to 8 wet.-%, e.g. 4 to 6 wt.-%, of a low molecular (< 100 kDa) PVP component and 0 to 4 wt.-%, e.g. 1 to 3 wL.-%, of a high molecular ($\geq$ 100 kDa) PVP component. In one embodiment, the total PVP contained in the spinning solution consists of from 22 to 34 weight-% and in particular from 25 to 30 weight-% of a high molecular weight ($\geq$ 100 kDa) component and from 66 to 78 weight-%, in particular from 70 to 75 weight-% of a low molecular weight (< 100 kDa) component. Examples for high and low molecular weight PVP are, for example, PVP K85/K90 and PVP K30, respectively.

In a particular embodiment, the polymer solution used in the process for preparing the membrane of the present invention further comprises 66 to 86 wet.-% of solvent and 0 to 10 wt.-%, e.g. 0 to 5 wt.-% of suitable additives. Suitable additives are, for example, chosen form the group of water, glycerol and/or other alcohols. Water is especially preferred and is present in the spinning solution in an amount of from 0 to 8 wet.-%, preferably in an amount of from 2 to 6 wt.-%. In a particular embodiment, the solvent used in the process is chosen from the group consisting of N-methylcayrrolidonc (NMP), N-ethylpyrrolidone, N-octyl-pyrrolidone, dimethylacetamide (DMAC), dimethylsulfoxide (DMSO), dimethylformamide (DMF), butyrolactone and mixtures of said solvents. NMP is especially preferred. The spinning solution preferably is homogeneously degassed and filtered.

The center fluid or bore liquid which is used for preparing the membrane according to the invention comprises at least one of the above-mentioned solvents and a precipitation medium chosen from the group of water, glycerol and other alcohols. Furthermore, the center fluid comprises a polycarboxybetaine compound based on a poly(vinylpyrrolidonc-co-vinylimidazole). In one embodiment of the invention, the amount of the additive in the center fluid is from 0.02 to 2 wt.-%, for example from 0.05 to 0.5 wt.-%, or from 0.05 to 0.25 wet.-%, based on the total weight of the center fluid.

In one embodiment the center fluid comprises 44-69 wt.-% precipitation medium and 29-54 wt.-% of solvent. In a particular embodiment, the center fluid comprises 49-61 wet.-% of water and 37-49 wet.-% of NMP. The center fluid should also be degassed and filtered.

The viscosity of the polymer solution, measured according to DIN EN ISO 1628-1 at 22 °C, usually is in the range of from 3,000 to 15,000 mPa-s, e.g., from 4,000 to 8,000 mPa·s, or even 4,900 to 5,900 mPa·s.

In one embodiment of the process for preparing the membrane of the present invention, the temperature of the spinneret is 50-70 °C, e.g., 55 61 °C, the temperature of the spinning shaft is 25-65 °C, in particular 50-60 °C. The distance between the opening of the nozzle and the precipitation bath is from 30 to 100 cm, in particular 45 to 55 cm. The precipitation bath has a temperature of 10-40 °C, e.g. 20-30 °C. In one embodiment, the spinning velocity is in the range of 15-100 m/min, in particular 25-45 m/min.

The polymer solution coming out through the outer slit opening of the spinneret is, on the outside of the precipitating fiber, exposed to a humid steam/air mixture comprising a solvent in a content of between 0 and 10 wt.-%, related to the water content.

The temperature of the humid steam/air mixture is at least 15 °C, preferably at least 30 °C, and at most 75 °C, but is preferably not higher than 62 °C. Further, the relative humidity in the humid steam/air mixture is between 60 and 100%.

In another embodiment of the process, the humid steam/air mixture comprises a solvent in an amount of between 0 and 5 wet.-%, related to the water content. Preferably, the humid steam/air mixture comprises a solvent in an amount of between 0 and 3 wt.-%, related to the water content The effect of the solvent in the temperature-controlled steam atmosphere is to control the speed of precipitation of the fibers. If less solvent is employed, the outer surface will obtain a more dense surface, and if more solvent is used, the outer surface will have a more open structure. Dy controlling the amount of solvent within the temperature-controlled steam atmosphere surrounding the precipitating membrane, the amount and size of the pores on the outer surface of the membrane can be modified and controlled.

In one embodiment of the invention, the precipitation bath comprises from 85 to 100 wt-% of water and from 0 to 15 wt.-% of solvent, e.g. NMP. In another embodiment, the precipitation bath comprises from 90 to 100 wt.-% water and from 0 to 10 wt.-% NMP.

The membrane according to the present invention will then preferably be washed in water to remove waste components, and then be dried at temperatures of 150-280 °C, preferably 180 260 °C. Such drying will provide for an adequate evaporation of water and a defined shrinkage of pores. The final treatment consists of rinsing the membrane in water at a temperature of 50-95 °C, preferably 80-90 °C and subsequent drying at temperatures of 30-65 °C, preferably 55-65 °C.

In one embodiment, the membrane subsequently is steam sterilized at temperatures above 121 °C for at least 21 minutes.

In one embodiment, the hollow fiber membrane of the invention has an inner diameter of from 180 to 250 $\mu$m, e.g. 189 to 194 $\mu$m. In one embodiment, the wall thickness of the hollow fiber is in the range of from 10 to 50 $\mu$m, or even 34 to 36 $\mu$m.

Another aspect of the invention is a diffusion and/or filtration device comprising the membrane of the invention. Examples of such devices are dialyzers, hemofiltcrs, and ultrafilters. Such devices generally consist of a casing comprising a tubular section with end caps capping the mouths of the tubular section. A bundle of hollow fiber membranes is usually arranged in the casing in a way that a seal is provided between the first flow space formed by the fiber cavities and a second flow space surrounding the membranes on the outside. Examples of such devices are disclosed in EP 0 844 015 A2, EP 0 305 687 A1, and WO 01/60477 A2, all incorporated herein by reference.

Another aspect of the invention is the use of the membrane of the invention in hemodialysis, hemodiafiltration or hemofiltration ot blood. The membrane of the invention can be used for these purposes instead of conventional membranes, but in a similar manner. The person skilled in the art will easily derive the necessary *modus operandi.*

Still another aspect of the invention is the use of the membrane of the invention in bioprocessing, plasma fractionation, or the preparation of protein solutions. The membrane of the invention can be used for these purposes instead of conventional membranes, but in a similar manner. The person skilled in the art will easily derive the necessary *modus operandi.*

It will be understood that the features mentioned above and those described hereinafter can be used not only in the combination specified but also in other combinations or on their own, without departing from the scope of the present invention.

The present invention will now be described in more detail in the examples below. The examples are not intended to limit the scope of the present invention, but are merely an illusLration of particular embodiments of the invention.

### Analytical Methods

### i) Membrane bundle preparation

[A] Preparation of hand bundles:

The preparation of the membrane bundle after the spinning process is necessary to prepare the fiber bundle for the following performance tests. The first process step is to cut the fiber bundles to a defined length of 23 cm. The next process step consists of melting the ends of the fibers. An optical control ensures that all fibers are well melted. Then, the ends of the fiber bundle are transferred into a potting cap. The potting cap is fixed mechanically and a potting tube is put over the potting caps. Then the fibers are potted with polyurethane. After the polyurethane has hardened, the potted membrane bundle is cut to a defined length and stored dry before it is used for the different performance tests.

[B] Preparation of mini-modules:

Mini-modules [= fiber bundles in a housing] are prepared in a similar manner. The mini-modules ensure protection of the fibers and are used for steam-sterilization with residual water on the fiber. The manufacturing of the mini-modules differs in the following points:

$\Rightarrow$ The number of fibers required is calculated for an effective surface A of 360 cm$^2$ according to equation (1)

$$A = \pi \times d_i \times l \times n \ [cm^2] \qquad\qquad (1)$$

with

$d_i$ = inner diameter of fiber [cm]
n = amount of fibers
l = effective fiber length [cm]

⇒ The fiber bundle is cut to a defined length of 20 cm
⇒ The fiber bundle is transferred into the housing before the melting process
⇒ The mini-module is put into a vacuum drying oven over night before the potting process

[C] Preparation of filters:

The filter (= dialyzer) comprises about 8.000-10.000 fibers with an effective surface area of 1.4 $m^2$. A filter is characterized by a cylindrical housing with two connectors for the dialyzing fluid and caps applied on both ends, each with one centered blood connector. The manufacturing process (after winding) can be divided into the following main steps:

⇒ the cut bundles (length approx. 30 cm) are transferred into the housing with a special bundle claw;
⇒ both ends of the bundles are closed by a closing process;
⇒ the fibers are potted into the housing with polyurethane (PUR);
⇒ the ends are cut to open the fibers;
⇒ the caps are welded to the blood connectors using ultrasonic welding;
⇒ final treatment comprises: rinsing, integrity testing, final drying;
⇒ the filters are packed in sterile bags and steam sterilized.

**ii) Hydraulic Permeability (Lp) of hand bundles and mini-modules**

The hydraulic permeability of a membrane bundle is determined by pressing a defined volume of water under pressure through the membrane bundle, which has been sealed on one side, and measuring the required time. The hydraulic permeability can be calculated from the determined time, the effective membrane surface area, the applied pressure and the volume of water pressed through the membrane. From the number of fibers, the fiber length as well as the inner diameter of the fiber, the effective membrane surface area is calculated. The membrane bundle has to be wetted thirty minutes before the Lp-test is performed. For this purpose, the membrane bundle is put in a box containing 500 ml of ultrapure water. After 30 minutes, the membrane bundle is transferred into the testing system. The testing system consists of a water bath that is maintained at 37 °C and a device where the membrane bundle can be mounted. The filling height of the water bath has to ensure that the membrane bundle is located underneath the water surface in the designated devices. To avoid that a leakage of the membrane leads to a wrong test result, an integrity test of the membrane bundle and the test system has to be carried out in advance. The integrity test is performed by pressing air through the membrane bundle that is closed on one side of the bundle. Air bubbles indicate a leakage of the membrane bundle or the test device. It has to be checked if the leakage can be associated with an incorrect mounting of the membrane bundle in the test device or if a real membrane leakage is present. The membrane bundle has to be discarded if a leakage of the membrane is detected. The pressure applied in the integrity test has to be at least the same value as the pressure applied during the determination of the hydraulic permeability in order to ensure that no leakage can occur during the measurement of the hydraulic permeability because the pressure applied is too high.

**iii) Hydraulic Permeability (Lp) of filters**

The hydraulic permeability of a filter is determined by flowing a defined volume of water through the membrane and measuring the trans-membrane pressure. Before starting the measurement, the filter has to be totally filled (inside the membrane and the compartment between Lhe housing and the membranes) with the testing fluid. Air is removed thereby by gentle tapping. The testing fluid, a 0,9 wt.-% sodium chloride solution in pure water, is heated to 38°C and then pumped through the blood inlet of the filter, while the blood exit connector and the inlet of the dialyzed connection are closed. The measurement takes 5 minutes and average values for the pressures are calculated. The calculation of the hydraulic permeability is performed as described in ii).

**iv) Diffusion experiments on hand bundles**

Diffusion experiments with isotonic chloride solution (0.9 wt.-%), vitamin B12 diluted in dialysis fluid (100 mg/l) and albumin in PBS buffer (100 mg/l) are carried out to determine the diffusion properties of a membrane. A hand bundle is put in a measuring cell. The measuring cell allows passing the particular solution at the inside of the hollow fiber. Additionally, the measuring cell is filled completely with water and a high cross-flow of distilled water is set to carry away the particular ions that pass the membrane cross-section from the inside of the hollow fiber to the outside. By adjusting the pressure ratios correctly, a zero filtration is aimed for, so that only the diffusion properties of the membrane are determined (by achieving the maximum concentration gradient of the particular ion between the inside of the hollow fiber and the surrounding of the hollow fiber) and not a combination of diffusive and convective properties. A sample from the pool is taken al the beginning and a sample of the reLenLaLe is taken after 10 and 20 minutes. The chloride samples are then titrated with silver nitrate solution to determine the chloride concentration. The vitamin B12 samples are analyzed photometrically and the albumin samples are analyzed using an Auto-analyzer (Mira Plus, ABX Diagnostics, Cobas, Roche). From the concentrations determined, the effective membrane surface arena A and the flow conditions, the permeability P, of chloride, vitamin Bl2, or albumin, respectively, can be calculated according to the following equation (2):

$$P_x \ [10^{-4} \text{cm/s}] \ = \ [Q_B/60/A] * \ln[(c_A - c_D)/c_R] * 10^4 \qquad (2)$$

with

P = diffusive permeability [cm/s]
C = concentration [mmol]
A = effective membrane surface [$cm^2$]

indices:

x = substance (here: chlorine, vitamin B12 or albumin, respectively)
A = starting concentration (feed)
D = dialysate
R = retentate
$Q_B$ = blood flow (ml/min)

**v) Selectivity / Sieving coefficient (SC) for proteins of hand bundles, mini-modules and filters**

The selectivity of a membrane is determined by sieving coefficient measurements. For this purpose, the medium in which the protein (here myoglobin from horse heart, MW - 17.5 kDa: ovalbumin, MW = 44 kDa; and albumin, MW = 66 kDa) is dissolved, is of crucial importance. The media used in this testing procedure is PBS buffer with a pH of 7.2. In general, the sieving coefficient of the particular molecule is obtained as follows: The particular protein solution is maintained at a temperature of 37°C $\pm$ 1°C and pumped under defined conditions (blood flow ($Q_B$), TMP and filtration rate (UF)) through the testing device (hand bundles, mini-modules or filters). Then, the concentration of the protein in the feed (in), in the retentate (r) and in the filtrate (r) is determined and the sieving coefficient (SC) can then be calculated according to the following equation (3):

$$SC \ [\%] \ = \ 2 \ * \ c(f) \ /[c(in) + c(r)] \ * \ 100\% \qquad (3)$$

If the concentration of the protein in the filtrate is zero, a sieving coefficient of 0 % is obtained. If the concentration of the protein in the filtrate equals the concentration of the protein in the feed and the retentate, a sieving coefficient of 100 % is obtained.

[A] Sieving Coefficient in aqueous solution on hand bundles and mini-modules

The Sieving Coefficient experiments in aqueous solution of myoglobin, ovalbumin and albumin are performed using two different experimental set-ups with separate solutions. First, the sieving coefficient of either myoglobin or ovalbumin is determined. Then the sieving coefficient of albumin is determined.

The concentration of myoglobin or ovalbumin, respectively, in the PBS buffer is 100 mg/1. The expiry date of the aqueous solution is between 4 and 8 weeks. The solution has to be stored in the refrigerator. Prior to the Sieving. Coefficient experiment, an Lp-test is performed as described above. The sieving coefficients experiment for myoglobin or ovalbumin, respectively, is run in single pass with testing conditions defined as follows:

The intrinsic flow rate ($J_v$ in cm/s) and wall shear rate ($\gamma$ in s$^{-1}$) are fixed whereas the blood flow ($Q_B$) and filtration rate (UF) is calculated using equations (4) and (5), respectively:

$$Q_B \ [ml/min] = \gamma * n * \pi * di^3 * 60/32 \qquad (4)$$

$$UF \ [ml/min] = J_v * A * 60 \qquad (5)$$

with

n = amount of fibers
$d_i$ = inner diameter of fiber [cm]
$\gamma$ = shear rate [s$^{-1}$]
A = effective membrane surface [cm$^2$]

wherein A is calculated according to equation (1).

When testing a hand bundle or a mini-module, the shear rate is set to 500 s$^{-1}$ and the intrinsic flow rate is defined to be 0.38*10$^{04}$ cm/s.

The first samples are taken after 15 minutes (pool, retentate, and filtrate) and a second time after 60 min. At the end, the test-bundle is rinsed for some minutes with PBS-buffer, then the test is stopped.

Subsequently, the SC-test of albumin is performed. 60 g of albumin are dissolved in PBS-buffer and the experiment is run re-circulating, the albumin solution being slowly stirred by a magnetic bar stirrer. In the test set-up, the $Q_B$ is calculated according to equation (4), a fixed TMP of 400 mmHg is set and the UF as well as the retentate flow is a result of the test conditions and the membrane permeability properties. After 15 minutes, the flow is switched to single-pass and samples (pool, retentate, filtrate) arc taken. After the SC-test the test-bundle can be rinsed once more with PBS-buffer and used to perform a second Lp-test in order to get an indication of the adsorption capacity of the membrane for the protein.

[B] Sieving Coefficient in aqueous solution on filters

In contrast to [A], the measurement of the sieving coefficient of myoglobin, ovalbumin and albumin on filters is performed with the same test set-up but with separate solutions. The solution is re-circulated. The concentration of myoglobin and ovalbumin, respectively, is 125 mg/l and the concentration of albumin is 250 mg/1. The intrinsic flow rate ($J_v$ in cm/s) and wall shear rate ($\gamma$ in s$^{-1}$) are fixed whereas the blood flow ($Q_B$) and the filtration rate (UF) are calculated using equations (6) and (5), respectively:

$$Q_B \ [ml/min] = \gamma * n * \pi * di^3 * 60/32 + J_v * A * 30 \qquad (6)$$

with

$$\gamma = 461 \ s^{-1} \ and \ J_v = 0,704*10^{-04} \ cm/s.$$

Sample taking for both substances is the same as in [A] with the difference that the second sample is taken after 30 minutes (not attcr 60 minutes).

vi) Clearance of Urea / Vitamin B12 on filters

Clearance of urea (MW = 60. Da) and vitamin B12 (MW = 1355 Da), respectively, on filters is measured on a dialysis machine using dialysis solution (dialysis concentrate diluted in degassed water) heated to 37°C 1 1°C. The dialysis solution comprising the particular substances is pumped through the blood side, pure dialysis fluid flows in Lhe dialysate compartment, and the mass transfer from blood to dialysate side is determined. Both flows are operated in single pass. The starting concentration of urea is Set to 1 g/l and the concentration of vitamin B12 is set to 50 mg/1, diluted in the same dialysis fluid. The following parameters are set:

$$Q_B = 400 \text{ ml/min}$$

$$Q_D = 500 \text{ ml/min}$$

$$UF = 0 \text{ ml/min}$$

The first samples are taken after 10 minutes and samples from $Q_B$, in, $Q_B$, out as well as $Q_{U, out}$ (for proofing the mass balance) are taken.

The Clearance C1 can be calculated according to equation (7) :

$$Cl = (Q_{B, in} * c_{B, in} - Q_{B, out} * c_{B, out}) / c_{B, in} \qquad (7)$$

**vii) UF Plasma / Protein loss on filters**

This performance test determines the protein loss as well as the filtration rate for a fixed blood flow of plasma on filters. The protein concentration of the plasma is set to 60 g/l $\pm$ 2 g/1. The plasma has to have a viscosity of 1,59 $\pm$ 0,05 mm$^2$/s as determined by a capillary viscosimeter, as well as a hematocrit of 30 $\pm$ 1%, and is heated to 37°C $\pm$ 1°C. Before starting the test, the filter is rinsed with isotonic saline. Then, the plasma is rc-circulated through the blood side and the measurement begins. Within 10 minutes, $Q_B$ = 300 ml/min and TMP = 300 mmHg are set. Samples of the filtrate are taken after 25 minutes and UF is determined volumetrically. The protein concentration of the filtrate Pct is then analyzed which relates to protein loss.

**Examples**

The dynamic viscosity $\eta$ of the polymer solutions was determined according to DIN ISO 1628-1 at a temperature of 22 °C using a capillary viscosimeter (ViscoSyslem[h] AVS 370, Schott-Geräte GmbH, Mainz, Germany).

**Example 1**

A polymer solution was prepared by dissolving polyethersulfone (Ultrason® 6020, BASF) and polyvinylpyrrolidone (K30 and K85 or K90, BASF) and distilled water in N-methylpyrrolidone (NMP). The weight fraction of the different components in the polymer spinning solution was: PES/PVP K85/PVP K30/H$_2$O/NMP was: M/2/5/3/76. The viscosity of the polymer solution was 5,900 mPa·s.

The polymers were dissolved in NMP and water at 60°C until a clear, highly viscous solution was obtained. The solution was filtrated and degassed. Degassing of the polymer solution was performed in a drying oven at increased temperature (<100°C) and reduced pressure (approx. 100 mbar).

A bore liquid was prepared by dissolving VPI modified with acrylic acid (Luvitec® VPI 55K 72 W modified with acrylic acid according to J. M. S. Pure Appl. Chem. A32 (1995) 1385-1396) in distilled water and N-methylpyrrolidone (NMP). The weight fraction of the different components in the center fluid was: H$_2$O/VPI/NMP was: 53%/0.05%/46.95%.

A membrane was formed by heating the polymer solution up to 50°C and passing the solution and the bore liquid through a spinning die. The temperature of the die was 59°C and the temperature of the spinning shaft was 57°C. The hollow fiber membrane was formed at a spinning speed of 45 m/min. The liquid capillary leaving the die was passed through a water bath (ambient temperature). The distance between the die and the precipitation bath was 50 cm. The hollow fiber membrane formed was guided through 5 different water baths.

The wet hollow fiber membrane had an inner diameter of 190 $\mu$m and an outer diameter of 262 $\mu$m and a fully asymmetric membrane structure. The active separation layer of the membrane was at the inner side. The active separation layer is defined as the layer with the smallest pores.

The performance of the membrane was measured on a) unsterile and b) sterile mini-modules (according to the methods described above).

Unsterilized and steam-sterilized membranes (mini-modules) :

The performance of the membrane was measured on unsterilized and steam-sterilized mini-modules (methods described above). Mini-modules comprising 356 fibers were prepared and hydraulic permeability as well as sieving coefficient of myoglobin, ovalbumin and albumin in aqueous solution was tested. The results are shown in Table 1.

## Example 2

Example 1 was repeated, setting the temperature of the die Lo 59°C and the temperature of the spinning shaft to 57°C.

The wet hollow fiber membrane had an inner diameter of 189 $\mu$m and an outer diameter of 257 $\mu$m and a fully asymmetric membrane structure. The active separation layer of the membrane was at the inner side.

Steam sterilized membranes (mini-modules) :

The performance of the membrane was measured on steam-sterilized mini-modules (methods described above). Hydraulic permeability as well as sieving coefficient of myoglobin, ovalbumin and albumin in aqueous solution was tested.
The results are shown in Table 1.

Table 1: Lp value, SC of myoglobin, ovalbumin and albumin measured in aqueous solution.

| Membrane | Sieving coefficient in aqueous solution [%] | | | | | |
|---|---|---|---|---|---|---|
| | LP | Myoglobin, 17KD | | Ovalbumin, 44KD | | Albumin, 66KD |
| | [$10^{-04}$ *cm/bar*s] | 15' | 60' | 15' | 60' | 15' |
| Example 1a | 120.1 | 92.0 | 86.4 | 68.9 | 53.4 | 6.3 |
| Example 1b | 131.8 | 82.2 | 72.4 | 67.6 | 57.6 | 6.0 |
| Example 2 | 180.2 | 95.8 | 92.0 | 78.5 | 63.4 | 12.9 |

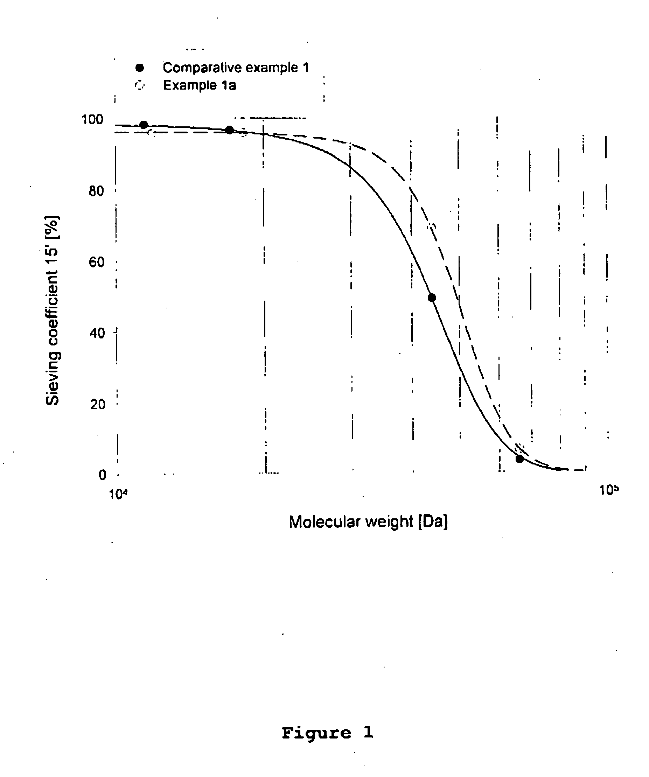

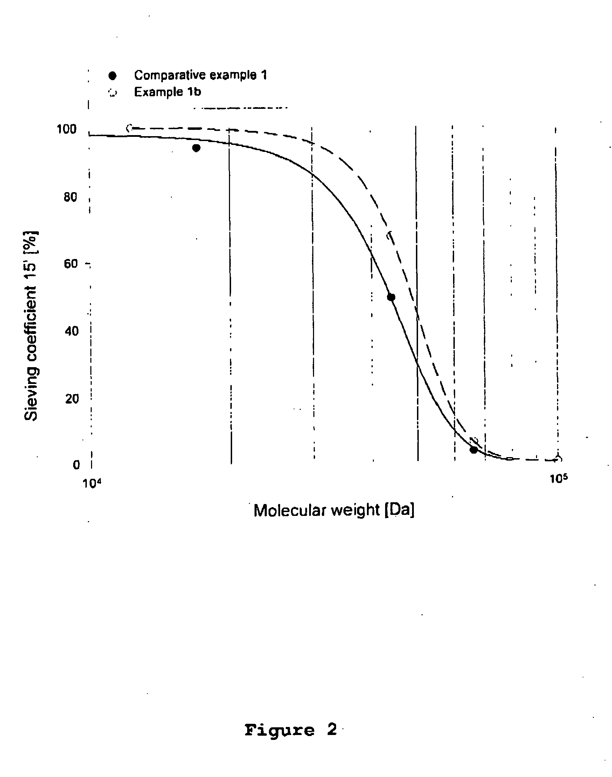

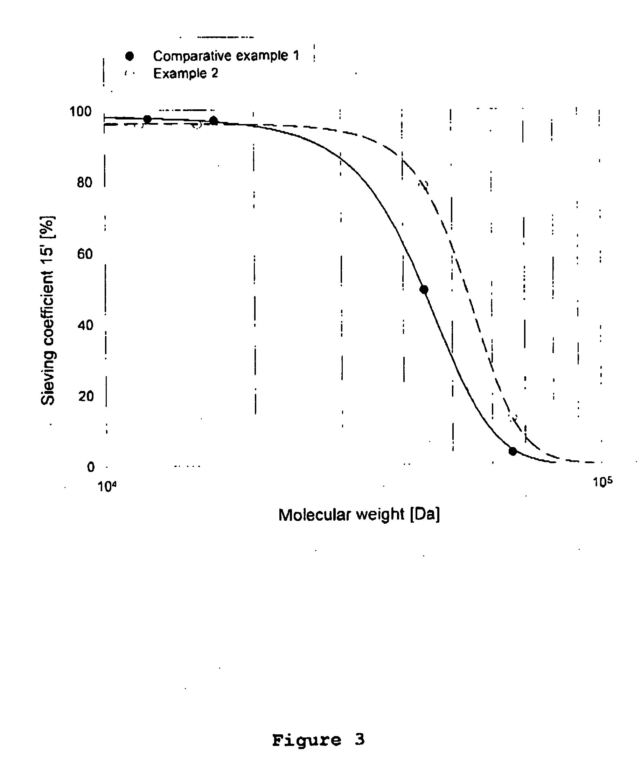

Figures 1 to 3 show the sieving profiles of the membranes of Examples la, lb, and 2, respectively, as well as the sieving profile of Comparative example 1, created by the measured sieving coefficients after 15' in aqueous solution of myoglobin, ovalbumin and albumin, assuming that the sieving coefficient for a molecule of MW 100 Da is 100% and the sieving coefficient of a molecule of MW 1,000 kDa is 0%.

## Comparative Examples

## Comparative Example 1

A polymer solution was prepared by dissolving polyethersulfone (BASF Ultrason 6020), polyvinylpyrrolidone (BASF K30 and K85) and distilled water in N-Methylpyrrolidone (NMP). The weight fraction of the different components in the polymer spinning solution was: PES - PVP K85 - PVP K30 - $H_2O$ - NMP: 14 - 2 - 5 - 3 - 76. The viscosity of the polymer solution was 5,010 mPa x s.

The remaining process steps were kept as in Example 1. The membrane formation procedure was changed in the following points:

Composition of bore liquid: $H_2O$ - NMP    54.5% - 45.5%;
Spinning speed:    50 m/min
Temperature of the die:    55 / 53°C;

The membrane was dried in an online-dryer.

The dried hollow fiber membrane had an inner diameter of 190 $\mu$m and an outer diameter of 260 $\mu$m and a fully asymmetric membrane structure. The active separation layer of the membrane was at the inner side.

Sterile membranes (mini-modules):

The sieving coefficients of myoglobin, ovalbumin and albumin in aqueous solution were tested on steam-sterilized mini-modules (methods described above). The results are shown in Table 2.

Table 2: Lp value, SC of myoglobin, ovalbumin and albumin measured in aqueous solution.

| Membrane | Sieving coefficient in aqueous solution [%] | | | | | |
|---|---|---|---|---|---|---|
| | Lp | Myoglobin, 17kD | | Ovalbumin, 44kD | | Albumin, 66kD |
| | [10$^{-04}$*cm/bar*s] | 15' | 60' | 15' | 60' | 15' |
| Comparative Example 1 | 85.7 | 94.1 | 93.0 | 49.1 | 31.9 | 3.4 |

**Comparative Example 2**

A polymer solution was prepared by dissolving polyethersulfone (BASF Ultrason 6020), polyvinylpyrrolidone (BASF K30 and K85) and distilled water in N-Mcthylpyrrolidone (NMP). The weight fraction of the different components in the polymer spinning solution was: PES - PVP K85 - PVP K30 - $H_2O$ - NMP: 14 - 2 - 5 - 2 - 77. The viscosity of the polymer solution was 5,378 mPa x s.
The remaining process steps were kept as in Example 1. The membrane formation procedure was changed in the following points:

Composition of bore liquid: $H_2O$ - NMP    53% - 47%;
Temperature of the die:    58 / 54°C;

The membranes were dried in an online-dryer
The dried hollow fiber membrane had an inner diameter of 215 $\mu$m and an outer diameter of 315 $\mu$m and a fully asymmetric membrane structure. The active separation layer of the membrane was at the inner side.

Sterile membranes (mini-modules):

The sieving coefficients of myoglobin, ovalbumin and albumin in aqueous solution were tested on steam-sterilized mini-modules (methods described above), The results are shown in Table 3.

Table 3: Lp value, SC of myoglobin, ovalbumin and albumin measured in aqueous solution.

| Membrane | Sieving coefficient in aqueous solution [%] | | | | | |
|---|---|---|---|---|---|---|
| | Lp | Myoglobin, 17kD | | Ovalbumin, 44kD | | Albumin, 66kD |
| | [10$^{-04}$*cm/bar*s] | 15' | 60' | 15' | 60' | 15' |
| Comparative Example 2 | 439.3 | 98.7 | 98.3 | 84.9 | 88.1 | 37.4 |

**Comparative Example 3**

Membranes were cut out of a commercially available Nipro PES-15S$\alpha$ (Nipro Corp., 3-9-3 Honjo-Kistii, Kita-ku, Osaka 531-8510, Japan) filter and mini-modules comprising 337 fibers were prepared ($A_{eff}$ = 360 cm'). The membranes had an inner diameter of 200 $\mu$m and a width of 40 $\mu$m. The membranes are gamma-sterilized.

Sterile membranes (mini-modulcs):

The sieving coefficients of myoglobin, ovalbumin and albumin in aqueous solution were tested using mini-modules comprising membranes taken out of a sterile filter (methods described above). The results are shown in Table 4.

Table 4: Lp value, SC of myoglobin, ovalbumin and albumin measured in aqueous solution.

| Membrane | Sieving coefficient in aqueous solution [%] | | | | | |
| | Lp | Myoglobin, 17kD | | Ovalbumin, 44kD | | Albumin, 66kD |
| | [$10^{-04}$*cm/bar*s] | 15' | 60' | 15' | 60' | 15' |
| Comparative Example 3 | 111.2 | 94.4 | 95.5 | 67.4 | 56.8 | 19.4 |

## Comparative Example 4

Membranes were cut out of a commercially available FX 100 filter (Frescnius Medical Care AG, 61346 Rad Homburg, Germany) and mini-modules comprising 381 fibers were prepared ($A_{eff}$ = 360 cm$^2$). The membranes had an inner diameter of l'/ 7 $\mu$m and a width of 37 $\mu$m.

Sterile membranes (mini-modules) :

The sieving coefficients of myoglobin, ovalbumin and albumin in aqueous solution were tested using mini-modules comprising membranes taken out of a sterile filter (methods described above). The results are shown in Table 5.

Table 5: Lp value, SC of myoglobin, ovalbumin and albumin measured in aqueous solution.

| Membrane | Sieving coefficient in aqueous solution [%] | | | | | |
| | Lp | Myoglobin, 17kD | | Ovalbumin, 44kD | | Albumin, 66kD |
| | [$10^{-04}$*cm/bar*s] | 15' | 60' | 15' | 60' | 15' |
| Comparative Examples 4 | 27.0 | 69.6 | 57.8 | 7.8 | 6.7 | 2.7 |

## Comparative Example 5

Membranes were cut out of a commercially available Nipro Sureflux® 150 FH GA (Nipro Corp., 3-9-3 Honjo-Kishi, Kita-ku, Osaka 531-8510, Japan) filter and mini-modules comprising 368 fibers were prepared ($A_{eff}$ = 360 cm$^2$). The membranes had an inner diameter of 183 $\mu$m and a width of 17 $\mu$m. The membranes are gamma-sterilized.

Sterile membranes (mini-modules) :

The sieving coefficients of myoglobin, ovalbumin and albumin in aqueous solution were tested using mini-modules comprising membranes taken out of a sterile filter (methods described above). The results are shown in Table 6.

Table 6: Lp value, SC of myoglobin, ovalbumin and albumin measured in aqueous solution.

| Membrane | Sieving coefficient in aqueous solution [%] | | | | | |
| | Lp | Myoglobin, 17kD | | Ovalbumin, 44kD | | Albumin, 66kD |
| | [$10^{-04}$*cm/bar*s] | 15' | 60' | 15' | 60' | 15' |
| Comparative Example 5 | 77.9 | 93.1 | 98.1 | 54.6 | 51.8 | 19.6 |

## Comparative Example 6

Membranes were cut out of a commercially available Baxter CA 150G (Baxter S.A., Renal Division, 78310 Maurepas, France) filter and mini-modules comprising 455 fibers were prepared ($A_{eff}$ = 360 cm$^2$). The membranes had an inner diameter of 148 $\mu$m and a width of 12 $\mu$m.

Sterile membranes (mini-modules) :

The sieving coefficients of myoglobin, ovalbumin and albumin in aqueous solution were tested using minl-modulcs comprising membranes taken out of a. sterile filter (methods described above). The results are shown in Table 7.

Table 7: Lp value, SC of myoglobin, ovalbumin and albumin measured in aqueous solution.

| Membrane | Sieving coefficient in aqueous solution [%] | | | | | |
|---|---|---|---|---|---|---|
| | Lp | Myoglobin, 17kD | | Ovalbumin, 44kD | | Albumin, 66kD |
| | [$10^{-04}$*cm/bar*s] | 15' | 60' | 15' | 60' | 15' |
| Comparative Example 6 | 1.7 | 4.9 | 5.3 | <1.9' | <1.9' | <0,05' |
| below detection limit | | | | | | |

## Comparative Example 7

Membranes were cut out of a commercially available Baxter Xenium® 210 (Baxter S.A., Renal Division, 78310 Maurepas, France) filter and mini-modules comprising 351 fibers were prepared ($A_{eff}$ = 360 cm$^2$). The membranes had an inner diameter of 192 $\mu$m and a width of 34 $\mu$m.

Sterile membranes (mini-modules):

The sieving coefficients of myoglobin, ovalbumin and albumin in aqueous solution were tested using mini-modules comprising membranes taken out of a sterile filter (methods described above). The results are shown in Table 8.

Table 8: Lp value, SC of myoglobin, ovalbumin and albumin measured in aqueous solution.

| Membrane | Sieving coefficient in aqueous solution [%] | | | | | |
|---|---|---|---|---|---|---|
| | Lp | Myoglobin, 17kD | | Ovalbumin, 44kD | | Albumin, 66kD |
| | [$10^{-04}$*cm/bar*s] | 15' | 60' | 15' | 60' | 15' |
| Comparative Examples 7 | 61.3 | 64.9 | 52.4 | <21.1⁻ | <21.2⁻ | 0.7' |
| below detection limit | | | | | | |

## Comparative Example 8

Membranes were cut out of a commercially available Hospal Nephral® AN69ST (Gambro Industries, 69330 Meyzieu, France) filter after rinsing the blood compartment of the filter for 1 hour by recirculation of 1 liter of glycerol solution (60 w/w.%) at 50 to 100 m1/min whilst the dialysate compartment was closed (to avoid ultrafiltration) and subsequent purging of the blood compartment with air for 20 minutes. Mini-modules comprising 351 fibers were prepared ($A_{eff}$ - 360 cm$^2$) according to the standard operation procedure. The membranes had an inner diameter of 192 um and a width of 38 $\mu$m.

Sterile membranes (mini-modules) :

The sieving coefficients of myoglobin, ovalbumin and albumin in aqueous solution were tested using mini-modules comprising membranes taken out of a sterile filter (methods described above). The results are shown in Table 9.

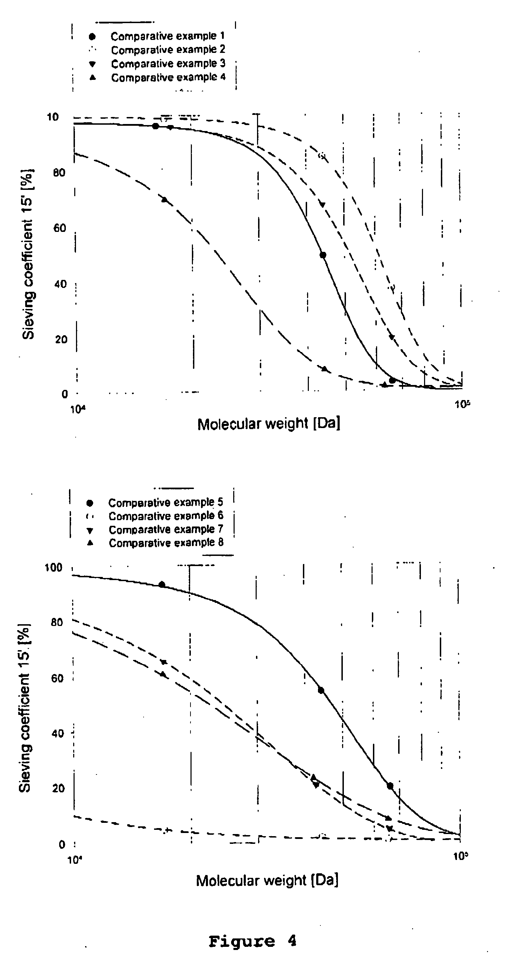

Figure 4 shows the sieving profiles of the membranes of Comparative examples 1-4 (top) and 5-8 (bottom) created by the measured sieving coefficients after 15' in aqueous so-Jution of myoglobin, ovalbumin and albumin, assuming that the sieving coefficient for a molecule of MW 100 Da is 100% and the sieving coefficient of a molecule of MW 1,000 kDa is 0%.

Table 9: Lp value, SC of myoglobin, ovalbumin and albumin measured in aqueous solution.

| Membrane | Sieving coefficient in aqueous solution [%] | | | | | |
| | Lp | Myoglobin, 17kD | | Ovalbumin, 44kD | | Albumin, 66kD |
| | $[10^{-04}*cm/bar*s]$ | 15' | 60' | 15' | 60' | 15' |
| Comparative Example 8 | 5.6 | 61.0 | 65.6 | <19.9⁻ | <19-3⁻ | 9.4' |
| below detection limit | | | | | | |

Table 10 summarizes the values of the difference of the sieving coefficient for ovalbumin (MW = 44 kDa) and the sieving coefficient for albumin (MW = 66 kDa) in aqueous solution for the membranes of Examples 1a, 1b, and 2 and Comparative Examples 1-8.

Table 10: Difference of the sieving coefficients for ovalbumin and albumin in aqueous solution.

| Membrane | $(SC_{Ov}\text{-}SC_{Alb})$ [%] |
| --- | --- |
| Example 1a | 62.6 |
| Example 1b | 61.6 |
| Example 2 | 65.6 |
| Comparative example 1 | 45.7 |
| Comparative example 2 | 47.5 |
| Comparative example 3 | 48.0 |
| Comparative example 4 | 5.1 |
| Comparative example 5 | 35.0 |
| Comparative example 6 | 1.8 |
| Comparative example 7 | 20.4 |
| Comparative example 8 | 10.5 |

## Claims

1. A permselective asymmetric hollow fiber membrane, wherein the surface of the lumen of said membrane is modified with a polycarboxybetaine compound based on a poly-(vinylpyrrolidone-co-vinylimidazole).

2. The membrane of claim 1, wherein the polycarboxybetaine compound is the product of the reaction of a poly-(vinylpyrrolidone-co-vinylimidazole) with acrylic acid.

3. The membrane of claim 1, wherein the polycarboxybetaine compound is the product of the reaction of a poly-(vinylpyrrolidone-co-vinylimidazole) with chloroacetic acid.

4. The membrane of claims 2 or 3, wherein the poly-(vinylpyrrolidone-co-vinylimidazole) is a copolymer of 50 mol-% vinylpyrrolidone and 50 mol-% vinylimidazole.

5. The membrane of any one of claims 1 to 4, wherein the difference of the sieving coefficient of the membrane for ovalbumin in aqueous solution and the sieving coefficient of the membrane for albumin in aqueous solution is at least 50%.

6. A process for preparing the membrane of any one of claims 1 to 5, comprising the steps of

   a) dissolving at least one membrane-forming polymer in at least one solvent to form a polymer solution;
   b) extruding said polymer solution through an outer ring slit of a nozzle with two concentric openings;
   c) extruding a center fluid through the inner opening of the nozzle; and thereafter

d) washing the membrane obtained and, optionally, drying said membrane and sterilizing said membrane by steam treatment;

wherein the center fluid comprises a polycarboxybetaine compound based on a poly(vinylpyrrolidone-co-vinylimidazole).

7. The process of claim 6, wherein the center fluid contains from 0.02 to 2 wt.-% of the polycarboxybetaine compound.

8. A diffusion and/or filtration device comprising a membrane according to any one of claims 1 to 5, or a membrane prepared according to claims 6 or 7.

9. Use of a membrane according to any one of claims 1 to 5, or prepared according to claims 6 or 7, in hemodialysis, hemodiafiltration, or hemofiltration of blood; bioprocessing; plasma fractionation; or the preparation of protein solutions.

**Patentansprüche**

1. Permselektive asymmetrische Hohlfasermembran, bei der die Oberfläche des Lumens der Membran modifiziert ist mit einer Polycarboxybetainverbindung, die auf einem Poly-(vinylpyrrolidon-co-vinylimidazol) basiert.

2. Membran gemäß Anspruch 1, bei der die Polycarboxybetainverbindung das Produkt der Reaktion eines Poly-(vinylpyrrolidon-co-vinylimidazol)s mit Acrylsäure ist.

3. Membran gemäß Anspruch 1, bei der die Polycarboxybetainverbindung das Produkt der Reaktion eines Poly-(vinylpyrrolidon-co-vinylimidazol)s mit Chloressigsäure ist.

4. Membran gemäß Anspruch 2 oder 3, bei der das Poly-(vinylpyrrolidon-co-vinylimidazol) ein Copolymer von 50 mo1-% Vinylpyrrolidon und 50 mo1-% Vinylimidazol ist.

5. Membran gemäß einem der Ansprüche 1 bis 4, bei der die Differenz des Siebkoeffizienten der Membran für Ovalbumin in wässriger Lösung und des Siebkoeffizienten der Membran für Albumin in wässriger Lösung mindestens 50% beträgt.

6. Verfahren zur Herstellung der Membran gemäß einem der Ansprüche 1 bis 5, umfassend die Schritte

a) Lösen mindestens eines membranbildenden Polymers in mindestens einem Lösemittel, um eine Polymerlösung zu bilden;
b) Extrudieren der Polymerlösung durch den äußeren Ringspalt einer Düse mit zwei konzentrischen Öffnungen;
c) Extrudieren eines Zentralfluids durch die innere Öffnung der Düse; und danach
d) Waschen der erhaltenen Membran und, optional, Trocknen der Membran und Sterilisieren der Membran durch Behandlung mit Dampf;
wobei das Zentralfluid eine Polycarboxybetainverbindung enthält, die auf einem Poly(vinylpyrrolidon-co-vinylimidazol) basiert.

7. Verfahren gemäß Anspruch 6, bei dem das Zentralfluid 0,02 bis 2 Gew.-% der Polycarboxybetainverbindung enthält.

8. Diffusions- und/oder Filtrationsvorrichtung umfassend eine Membran gemäß einem der Ansprüche 1 bis 5, oder eine gemäß Anspruch 6 oder 7 hergestellte Membran.

9. Verwendung einer Membran gemäß einem der Ansprüche 1 bis 5, oder einer gemäß Anspruch 6 oder 7 hergestellten Membran bei der Hämodialyse, Hämodiafiltration oder Hämofiltration von Blut; in der Bioverfahrenstechnik; bei der Plasmafraktionierung; oder bei der Herstellung von Proteinlösungen.

**Revendications**

1. Membrane à perméabilité sélective comportant des fibres creuses asymétriques, dans laquelle la surface du lumen de ladite membrane est modifiée avec un composé de poly carboxy bétaïne basé sur un poly (vinyl pyrrolidone-co-vinyl imidazole).

**2.** Membrane selon la revendication 1, dans laquelle le composé de poly carboxy bétaïne est le produit de la réaction d'un poly (vinyl pyrrolidone-co-vinyl imidazole) avec de l'acide acrylique.

**3.** Membrane selon la revendication 1, dans laquelle le composé de poly carboxy bétaïne est le produit de la réaction d'un poly (vinyl pyrrolidone-co-vinyl imidazole) avec de l'acide chloro acétique.

**4.** Membrane selon les revendications 2 ou 3, dans laquelle le poly (vinyl pyrrolidone-co-vinyl imidazole) est un copolymère de 50 moles % de vinyl pyrrolidone et 50 moles % de vinyl imidazole.

**5.** Membrane selon l'une quelconque des revendications 1 à 4, dans laquelle la différence du coefficient de criblage de la membrane pour l'ovalbumine en solution aqueuse et le coefficient de criblage de la membrane pour l'albumine en solution aqueuse est au moins 50 %.

**6.** Procédé pour préparer la membrane selon l'une quelconque des revendications 1 à 4, comprenant les étapes consistant à

a) dissoudre au moins un polymère de formation de membrane dans au moins un solvant pour former une solution de polymère ;
b) extruder ladite solution de polymère à travers une fente annulaire extérieure d'une buse avec deux ouvertures concentriques ;
c) extruder un fluide central à travers l'ouverture intérieure de la buse ; et ensuite
d) laver la membrane obtenue et, en option, faire sécher ladite membrane et stériliser ladite membrane par traitement à la vapeur ;
dans lequel le fluide central comprend un composé de poly carboxy bétaïne basé sur un poly (vinyl pyrrolidone-co-vinyl imidazole).

**7.** Procédé selon la revendication 5, dans lequel le fluide central contient de 0,02 à 2 % en poids du composé de poly carboxy bétaïne.

**8.** Dispositif de diffusion et/ou de filtration comprenant une membrane selon l'une quelconque des revendications 1 à 5, ou une membrane préparée selon les revendications 6 ou 7.

**9.** Utilisation d'une membrane selon l'une quelconque des revendications 1 à 5, ou préparée selon les revendications 6 ou 7, pour l'hémodialyse, l'hémodiafiltration ou l'hémofiltration de sang ; les traitements biologiques ; le fractionnement du plasma ; ou la préparation de solutions de protéines.

Figure 1

Figure 2

Figure 3

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0082433 A2
- EP 0168783 A
- EP 0305787 A1
- EP 0568045 A1
- EP 0750936 A1
- WO 2004056459 A1
- EP 1747059 A1
- JP 2003320229 A

- WO 200724393 A
- EP 0168783 A1
- WO 2004056469 A1
- WO 8600028 A1
- EP 0844015 A2
- EP 0305687 A1
- WO 0160477 A2

**Non-patent literature cited in the description**

- **E. Klein ; F. Holland ; A. Lebeouf ; A. Donnaud ; J. K. Smith.** Transport and Mechanical Properties of Hemodialysis Hollow Fibers. *Journal of Membrane Science,* 1976, vol. 1, 371-396

- *J. M. S. Pure Appl. Chem.,* 1995, vol. A32, 138b-1396
- *J. M. S. Pure Appl. Chem.,* 1995, vol. A32, 1385-1396